(19) Europäisches Patentamt

European Patent Office

Office européen des brevets

(11) **EP 1 427 150 A2**

(12) **EUROPEAN PATENT APPLICATION**

(43) Date of publication:
**09.06.2004 Bulletin 2004/24**

(51) Int Cl.$^7$: **H04L 12/28**

(21) Application number: **03257578.9**

(22) Date of filing: **02.12.2003**

| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK**<br><br>(30) Priority: **02.12.2002 KR 2002076040**<br><br>(71) Applicant: **Samsung Electronics Co., Ltd.**<br>**Suwon-si, Gyeonggi-do (KR)** | (72) Inventors:<br>• **Choi, Hyong-uk**<br>  **Gangseo-gu Seoul (KR)**<br>• **Yun, Suk-jin**<br>  **Seocho-gu Seoul (KR)**<br><br>(74) Representative: **Robinson, Ian Michael et al**<br>**Appleyard Lees,**<br>**15 Clare Road**<br>**Halifax HX1 2HY (GB)** |

(54) **Method of transmitting multimedia data over WLAN and point coordinator in WLAN**

(57)    Transmitting multimedia data over a wireless local area network (WLAN), guaranteeing the full length of a multimedia point coordination function (mPCF) period in a WLAN, and dynamically allotting a length of the mPCF period, by receiving a request for multimedia resource from a predetermined device connected to the WLAN, during a distributed coordination function (DCF) period when a right to use a channel is distributed through contention and unilaterally transmitting the requested multimedia resource to the predetermined device during the mPCF period when the right to use a channel is distributed in a centralized manner.

FIG. 5

EP 1 427 150 A2

**Description**

The present invention relates to a wireless local area network (WLAN), and more particularly, to a method of transmitting multimedia data over a WLAN, a method of guaranteeing the full length of a point coordination function (PCF) period over a WLAN, and a point coordinator in a WLAN.

Recently, greater public attention has been paid to WLAN-based multimedia data transmission techniques rather than regular data transmission techniques. Home network technology, which used to be considered as marginal communication technology, has emerged as one of the most promising next-generation core technologies, and wireless multimedia home network technology, in particular, has become one of the most attention-grabbing applications of the home network technology.

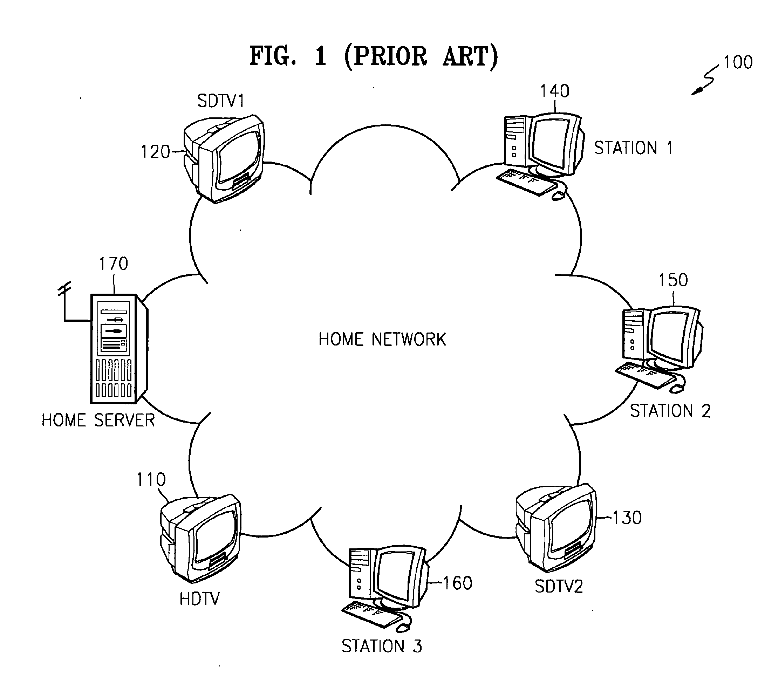

Figure 1 is a diagram illustrating a home network constituted by a plurality of devices connected to one another. Referring to Figure 1, a home network 100 is constituted by a home server 170, a high definition television (HDTV) set 110, two standard definition television (SDTV) station sets 120 and 130, and three stations 140, 150, and 160.

A high-speed wireless local area network (WLAN) based on the IEEE 802.11a/g standard has been considered as a highly recommended solution for meeting the requirements of a home network. The media access control (MAC) mechanism of the IEEE 802.11a/g high-speed WLAN involves a distributed coordination function (DCF), under which a binary random back-off algorithm is carried out to reduce the likelihood of collisions between a plurality of stations contending for access to a network in a carrier sense multiple access/collision avoidance (CSMA/CA) manner, and a point coordination function (PCF), under which an access point (AP), including a point coordinator (PC), tells the plurality of stations in a contention free period (CFP) when they may place data on the network and transmit the data, through centralized polling scheduling. The MAC mechanism supports a maximum data rate of 54 Mbps and guarantees a high defective data recovery rate using orthogonal frequency division multiplexing (OFDM) along with forward error correction (FEC). Due to the characteristics of algorithms enabling the MAC mechanism, however, the MAC mechanism inevitably has numerous restrictions and disadvantages in real-time transmission of large multimedia data, such as HDTV-level multimedia data.

For this reason, it is necessary to develop an improved version of the MAC mechanism, which can successfully fit in such a specific communications environment as a wireless home network and can efficiently facilitate the real-time transmission of a considerable amount of multimedia data, such as HDTV-level multimedia data. Such an improved MAC mechanism is required to provide transparent services to stations that follow conventional data transmission standards.

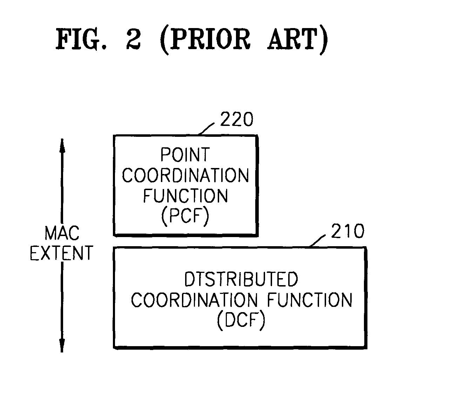

In an IEEE 802.11 WLAN, stations communicate with one another using a shared wireless medium. Attempts to access the wireless medium are controlled by a coordination function implemented in a LAN module. The IEEE 802.11 WLAN supports two different coordination functions, i.e., the DCF and the PCF. As shown in Figure 2, in the IEEE 802.11 WLAN, the PCF (220) operates over the DCF (210).

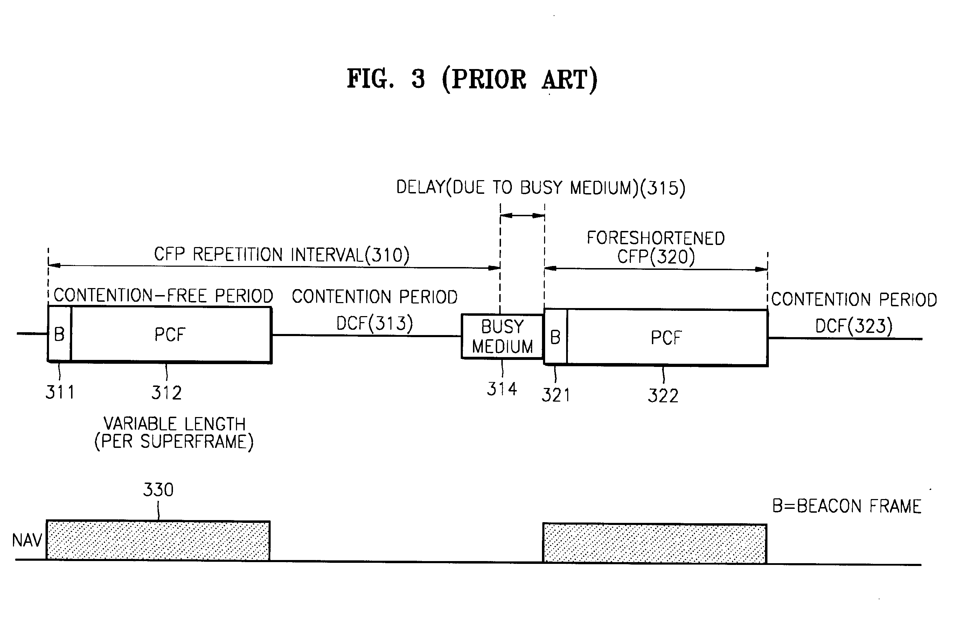

Hereinafter, the PCF and the DCF will be described in greater detail with reference to Figure 3. The DCF adopts CSMA/CA, which is similar to carrier sense multiple access/collision detect (CSMA/CD) specified in the IEEE 802.3 standard, and the PCF controls access to a wireless medium in a centralized manner using a special station called a pointer coordinator. The DCF is a contention-based service in a contention period (CP), which minimizes collisions between stations and carries out a back-off mechanism to make the stations share a given number of channels. The PCF, unlike the DCF, is not based on contention of stations for access to a network. Rather, in a contention free period (CFP), the PCF allows a pointer coordinator (PC) to sequentially allot a right to use a predetermined channel to stations through polling. When the contention period (CP) arrives after the CFP, the stations contend for the right to use the predetermined channel according to the back-off mechanism. The CFP begins as soon as the PC broadcasts a beacon frame 311 and ends with a CF-End frame. Network Allocation Vector (NAV) 330 in the beacon frame makes the stations that attempt to access a current network using a channel temporarily stop independent operations and stay under the control of the PC during the CFP. When the CFP is over, the stations operate according to the DCF rules.

Figure 3 illustrates a DCF beacon delay circumstance. If a predetermined station fails to complete data transmission by the end of the CP, transmission of a beacon 321 by the PC is delayed by as much as a predetermined amount of time indicated by 315, and therefore, a PCF period 322 is shortened.

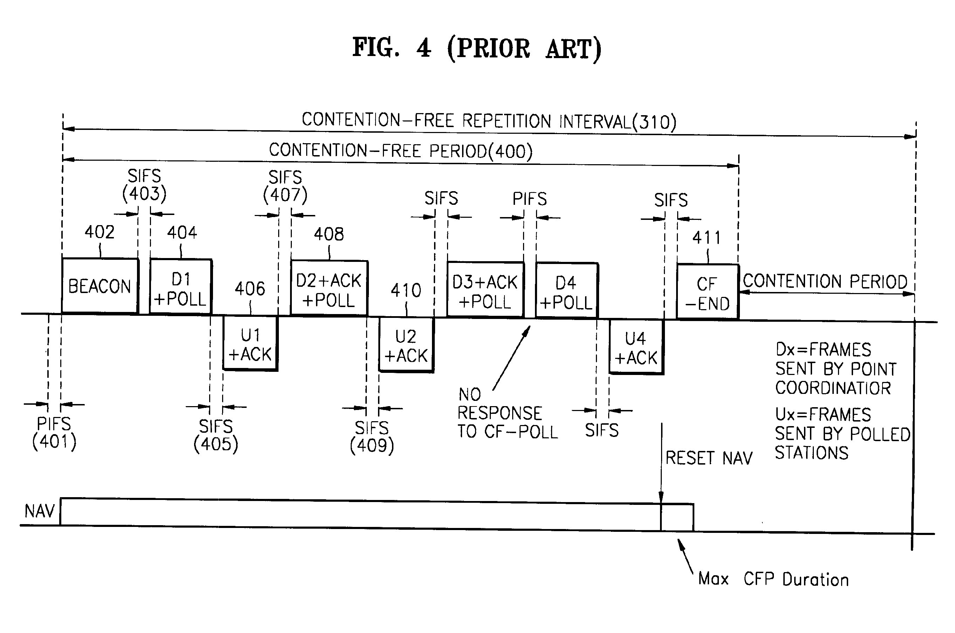

From now on, an IEEE 802.11 PCF will be described more fully with reference to Figure 4. A PC informs all stations under its control of the beginning of a CFP by broadcasting, after a space 401, a beacon frame 402. In response to the reception of the beacon frame 402, the stations stop all independent operations. Only a predetermined station that has an address shown in a poll frame sent from the PC is granted a right to access a channel and thus can transmit data via the channel. During the CFP, all attempts to access the channel through a DCF are blocked, and the stations are only allowed to access the channel by the PC carrying out polling.

The PC sequentially performs a series of polling operations according to a predetermined polling list. In particular, if it has data needed to be transmitted to a predetermined station according to the predetermined polling list, the PC transmits a polling frame 404 to the predetermined station together with the data conveyed by the polling frame. Otherwise, the PC transmits only the polling frame 404 to the corresponding station so that the predetermined station can have a chance to transmit data. Then, after a short inter-frame spacing (SIFS) 405 is passed, during which the predetermined station that has received the polling frame can prepare itself to respond to the reception of the polling frame, the predetermined station sends an ACK frame 406 to the PC. If the predetermined station has data needed to be transmitted, it sends the ACK frame 406 to the PC together with the data conveyed by the ACK frame 406. Otherwise, the predetermined station sends only the ACK frame 406 to the PC. The PC performs the above-described process on each station listed on the polling list, as shown in Figure 4 for D2 408, in which the PC transmits data, and, after a space 407, ACK 410, in which a polled station transmits data.

If a CFP is over or if the stations included in the polling list have already been polled by the PC at least one time before the CFP is over, the PC gives all control rights back to the stations and thus allow the stations to contend with one another for access to the network by broadcasting a CF-end frame 411.

One of the most prominent problems of the above-described conventional technique is that the conventional IEEE 802.11 technique, in which stations contend with one another for access to a network, is not suitable for transmission of a large amount of multimedia data because it may cause collisions between those stations attempting to transmit data. Even if a binary random back-off algorithm is adopted to prevent such collisions, it may end up with a considerable amount of delay time. Given a permissible data transmission speed range guaranteed by the current level of transmission technology, it is impossible to guarantee the transmission reliability of HDTV-level moving image data in IEEE 802.11. Even though the PCF mechanism has been suggested as an alternative to the conventional contention-based data transmission technique, its centralized control manner that creates a polling list including pollable stations and controls the stations on the polling list to sequentially transmit data in a predetermined order using an AP, which serves as a point coordinator, also has numerous problems. First of all, since the PCF mechanism lacks an effective means to create a polling list, it cannot adaptively create a polling list appropriate for given environment conditions. In addition, once a polling list is created, even stations, which do not have data to transmit, are polled, unnecessarily causing overhead. Moreover, due to the characteristics of such a polling process, it is very difficult to adaptively make a polling schedule in consideration of the amount of data to be transmitted. Further, the PCF period may be shortened because of delays during the DCF period (i.e., because of the DCF beacon delay), especially with multimedia data transmissions while there is contention, which delays, for example, real-time multimedia moving data (video), HDTV-level transmissions as well as reduce transmission reliability. Therefore, it is hard to guarantee the transmission reliability of HDTV-level multimedia data when a variety of devices operate simultaneously.

At this juncture, there is no commercialized product that operates based on the PCF manner because of the complexity of the PCF manner and lack of agreements on unified standard specifications. Therefore, most products are based on the DCF manner, which is limited to one HDTV-level data transmission and at least cannot accommodate two or more simultaneous HDTV-level data traffic, or any other real-time high volume data traffic exceeding the DCF throughput for real-time reproduction (e.g., too much contention). Even though the IEEE 802.11e working group is now vigorously carrying out standardization so as to guarantee quality of service (QoS), it has not suggested any prominent alternatives to the conventional PCF or DCF manner that can fully meet the requirements of a home network.

Further, conventional home network techniques only take scenarios suitable for balanced, reciprocal data transmission into account, meaning lack of mechanisms optimized for different environments, such as a multimedia driven home WLAN.

According to the present invention there is provided an apparatus and method as set forth in the appended claims. Preferred features of the invention will be apparent from the dependent claims, and the description which follows.

The present invention provides a method of transmitting multimedia data over a wireless local area network (WLAN), a method of guaranteeing a multimedia point coordination function (mPCF) period in a WLAN, and dynamically allotting a length of the mPCF period over a WLAN so as to transmit a considerable amount of multimedia data over a WLAN, causing a minimum level of overhead, and provide different services for different types of multimedia data.

More particularly, the present invention takes advantage of a characteristic of a home WLAN having devices supporting an HDTV or SDTV, in which unilateral data reception from a home server with a set-top box installed therein accounts for most of the entire traffic period.

Additional aspects and/or advantages of the invention will be set forth in part in the description which follows and, in part, will be obvious from the description, or may be learned by practice of the invention.

According to an aspect of the present invention, there is provided a method of transmitting multimedia data over a wireless local area network (WLAN). The method involves receiving a request for multimedia resource from a predetermined device connected to the WLAN, during a distributed coordination function (DCF) period when a right to use a channel is distributed through contention; and unilaterally transmitting the requested multimedia resource to the predetermined device during a multimedia point coordination function (mPCF) period when the right to use a channel is distributed in a centralized manner.

When it comes to contention-free distribution of large multimedia data, the above method guarantees a successful transmission of required resources with a minimum level of overhead. Therefore, the present invention can overcome the limit of the prior art in which HDTV-level data used to be impossible to transmit and reproduce within a real-time bound because of fierce contention. In addition, it is possible to simultaneously transmit a plurality of SDTV-level multimedia data.

According to another aspect of the present invention, there is provided a method of transmitting multimedia data over a WLAN, comprising receiving a request for multimedia resource from a predetermined device connected to the WLAN; scheduling the received request for the requested multimedia resource; and transmitting the requested multimedia resource to the predetermined device during a multimedia PCF period based on the scheduling result.

According to another aspect of the present invention, there is provided a method of transmitting multimedia data over a WLAN, comprising receiving a request for multimedia resource; dynamically allotting a predetermined length of a multimedia PCF (mPCF) period, during which the requested multimedia resource will be transmitted, according to the amount of the requested multimedia resource; and transmitting the requested multimedia resource during the allotted mPCF period.

Therefore, according to the present invention, it is possible to maximize efficiency by dynamically allotting an mPCF period. When many resources are required by large multimedia data, the present invention can guarantee reliability within a predetermined critical level through the dynamic allocation of the mPCF period. Even when there are fewer resources required by the multimedia data, the present invention can dynamically allot a longer DCF period by shortening an mPCF period. When there is no request for transmission of multimedia data, the above-mentioned method of transmitting multimedia data is performed in the same manner as in a typical DCF period. Therefore, the present invention provides a mechanism where non-multimedia-aware stations can operate without losing compatibility with other multimedia-aware stations.

According to another aspect of the present invention, there is provided a method of guaranteeing the full length of the mPCF period in a WLAN, comprising monitoring DCF beacon delay; and adjusting a Max_CFP_Duration value if the monitoring result tells that beacon delay has occurred.

Therefore, it is possible to prevent transmission of real-time data from being delayed due to beacon delay. In addition, it is possible to compensate for the amount of time for which the transmission of the real-time data is delayed and to prevent jitter delay by monitoring beacon transmission time using an access point and, if necessary, dynamically setting Max_CFP_Duration.

According to another aspect of the present invention, there is provided a multimedia point coordinator in a WLAN, receiving a request for multimedia resource from a predetermined device connected to the WLAN, during a distributed coordination function (DCF) period when a right to use a channel is distributed through contention, and unilaterally transmitting the requested multimedia resource to the predetermined device during a multimedia point coordination function (mPCF) period when the right to use a channel is distributed in a centralized manner.

According to an aspect of the invention, the multimedia point coordinator includes a multimedia scheduler that schedules the received request for multimedia resource and transmits the requested multimedia resource to the predetermined device during the mPCF period according to the scheduling result obtained by the scheduler.

Since the multimedia point coordinator of the present invention can provide an excellent MAC mechanism software-wise without hardware modifications or improvements, it is possible to make the utmost use of physical limits in data transmission speed and improve data transmission performance by applying a burst transmission algorithm.

The above and/or other aspects and advantages of the present invention will become more apparent by describing in detail exemplary embodiments thereof with reference to the attached drawings in which:

Figure 1 is a diagram illustrating a wireless local area network (WLAN)-based home network;

Figure 2 is a diagram illustrating the relationship between a distributed coordination function (DCF) and a point coordination function (PCF) according to the conventional IEEE 802.11;

Figure 3 is a diagram illustrating conventional DCF and PCF according to the conventional IEEE 802.11;

Figure 4 is a diagram illustrating data transmission during a PCF period according to the conventional IEEE 802.11;

Figure 5 is a diagram illustrating scheduling of a multimedia PCF (mPCF) period in a data transmitter, according to an embodiment of the present invention;

Figure 6 is a functional block diagram of a home server according to an embodiment of the present invention;

Figure 7 is a functional block diagram of an mPCF period scheduling device according to an embodiment of the present invention;

Figure 8 is a flowchart of transmitting multimedia data during an mPCF period according to an embodiment of the present invention;

Figure 9 is a diagram of a resource request frame according to an embodiment of the present invention;

Figure 10 is a flowchart of scheduling an mPCF period, according to an embodiment of the present invention;

Figure 11A is an example of an mPCF priority table shown in Figure 7;

Figure 11B is an example of an mPCF scheduling table shown in Figure 7;

Figure 12 is a diagram illustrating various types of data transmitted during an mPCF period and a transmission ratio among the various types of data, according to an embodiment of the present invention;

Figure 13 is a diagram illustrating handshaking ACK transmission, which is one type of receiving a response signal that confirms reception of multimedia data, during the mPCF period, according to an embodiment of the present invention;

Figure 14 is a diagram illustrating burst ACK transmission, which is another type of receiving a response signal that confirms reception of multimedia data, during the mPCF period, according to an embodiment of the present invention;

Figure 15 is a diagram illustrating a method of adjusting DCF beacon delay, according to an embodiment of the present invention;

Figure 16A is a table showing the time taken to transmit a single data frame during a DCF period according to the conventional WLAN;

Figure 16B is a table showing the time taken to transmit a single data frame according to a handshaking ACK transmission manner during an mPCF period of the present invention;

Figure 16C is a table showing the time taken to transmit a single data frame according to a burst ACK transmission manner during an mPCF period of the present invention;

Figure 17A is a graph showing different amounts of time taken to transmit multimedia data with different loads during a DCF or mPCF period of the present invention;

Figure 17B is a graph illustrating the variation of the performance of different access mechanisms with respect to multimedia data loads when there are three stations contending with one another for a channel using the present invention;

Figure 17C is a graph showing the variation of the time taken to transmit data when there is a need to retransmit the data because of collisions between stations using the present invention; and

Figure 18 is a table showing how much of a second an mPCF period and a DCF period account for in the case of transmitting 32 Mbit-multimedia data using the present invention.

Reference will now be made in detail to the embodiments of the present invention, examples of which are illustrated in the accompanying drawings, wherein like reference alphanumerics refer to the like elements throughout. The embodiments are described below to explain the present invention by referring to the figures.

Stations, such as an HDTV and an SDTV, do not require conventional bi-directional WLAN communications. Rather, such stations have unidirectional traffic characteristics, which serve as critical factors for realization of a multimedia point coordination function (mPCF). The mPCF is adopted to receive a considerable amount of multimedia data via a home gateway. The unidirectional traffic characteristics make it possible to remove back-off delay and polling overhead and still prevent collisions among the stations and also considerably help improve the performance of the stations during a multimedia point coordination function (mPCF) period, which is comparable to the performance of the stations during a distributed coordination function (DCF) period.

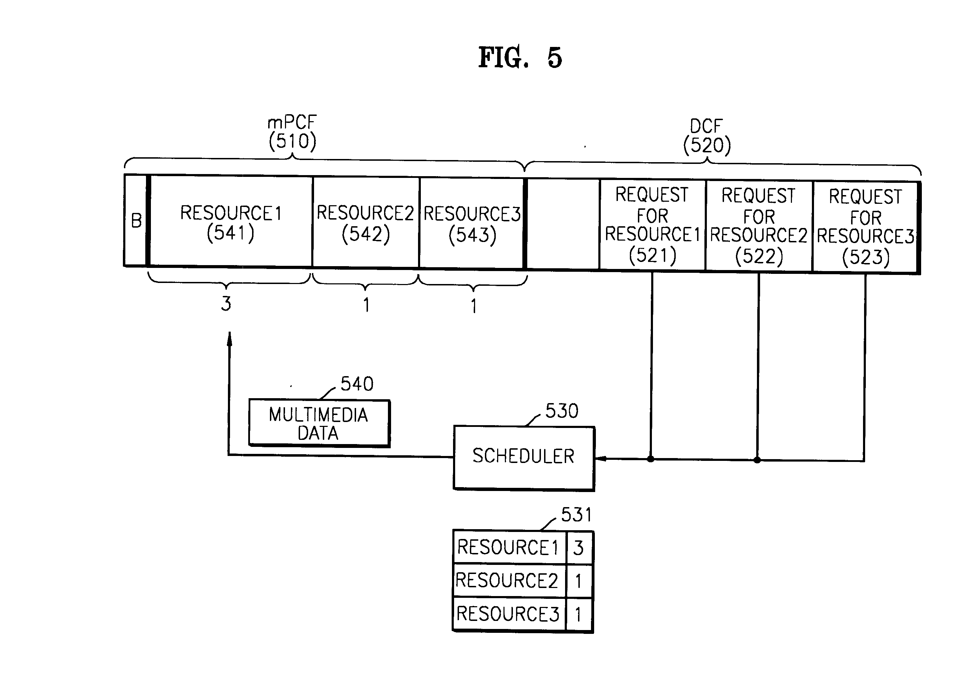

Figure 5 is a diagram illustrating scheduling of a mPCF period (or scheduling a received data transmission request) in a data transmitter, for example, as a home network server, according to an embodiment of the present invention. Therefore, a method of scheduling a mPCF period according to an embodiment of the present invention will be described in greater detail in the following paragraphs with reference to Figure 5. Medium access control (MAC) according to the present invention is constituted by multimedia PCF 510 and a DCF 520 rather than by a PCF and a DCF in the conventional IEEE 802.11 MAC. The mPCF allows a mPCF point coordinator to allot a right to use a channel to each station in a centralized manner. However, the mPCF mechanism differs from the PCF mechanism, because the mPCF performs resource scheduling in a suitable manner for the transmission of a large amount of multimedia data and the mPCF does not rely on polling. In the present invention, generally a resource is a network transmission band (or a channel) on which data can be transmitted (i.e., a data transmission request). The mPCF mechanism has been developed taking into consideration the notion that, typically, in a home network stations do not transmit any significant amount of data to a home server, but simply generally receive data from the home server.

In Figure 5, during the DCF period 520, an HDTV or SDTV, registered on a home server, transmits a resource-requesting frame to the home server. The HDTV or SDTV transmits various pieces of information included in the resource requesting frame, such as the type of data that it includes, a priority level, the number of MAC protocol data unit (MPDU) trains, and burst ACK interval information.

The resource-requesting frame that has been transmitted from the HDTV or SDTV to the home server can include multiple requests, such as resource request 1 (521), resource request 2 (522), and resource request 3 (523). An mPCF scheduler 530 of the home server, which receives the resource requesting frame, gives priority to multimedia data depending on importance of the multimedia data according to a multimedia data type and performs scheduling of the multimedia data according to the type of the multimedia data, and creates a schedule table 531.

The mPCF scheduler 530 transmits multimedia data 540 during the mPCF period 510 by referring to the schedule table 531. The mPCF period 510 begins with an mPCF beacon frame B. The mPCF controls access to the network in a centralized manner during the mPCF period 510, in which ordinary stations set an NAV value to wait for a DCF period arrival rather than transmit data. During the mPCF period 510, an mPCF point coordinator (i.e., in this case the home server 600 is the mPCF point coordinator) including the mPCF scheduler 530 transmits the requested multimedia data according to the mPCF scheduler 530. For example, according to the schedule table 531, resource 1 (541) is a top priority, and resource 1 (541), resource 2 (542), and resource 3 (543) account for a 3:1:1 data transmission ratio. Therefore, during the mPCF period 510, resource 1 (541) is transmitted first and foremost, and a data transmission rate among resource 1 (541), resource 2 (542), and resource 3 (543) is 3:1:1.

Since an mPCF access pointer, which includes the corresponding mPCF point coordinator, serves as a multimedia distribution center, which includes a set-top box and distributes a considerable amount of multimedia data to multimedia devices in a wireless home network, multimedia data is unilaterally transmitted from the home server to the multimedia devices, unlike in a conventional WLAN environment that relies on polling of the devices to transmit data to the devices.

More particularly, as described above, since the transmission of multimedia data in a wireless home network environment is unidirectional, during the mPCF period 510, the mPCF point coordinator is only required to constantly distribute multimedia data to the multimedia devices based on scheduling results rather than adopting a polling method in which the PC has to keep monitoring whether data has been transmitted to each of the multimedia devices and respond to monitoring results.

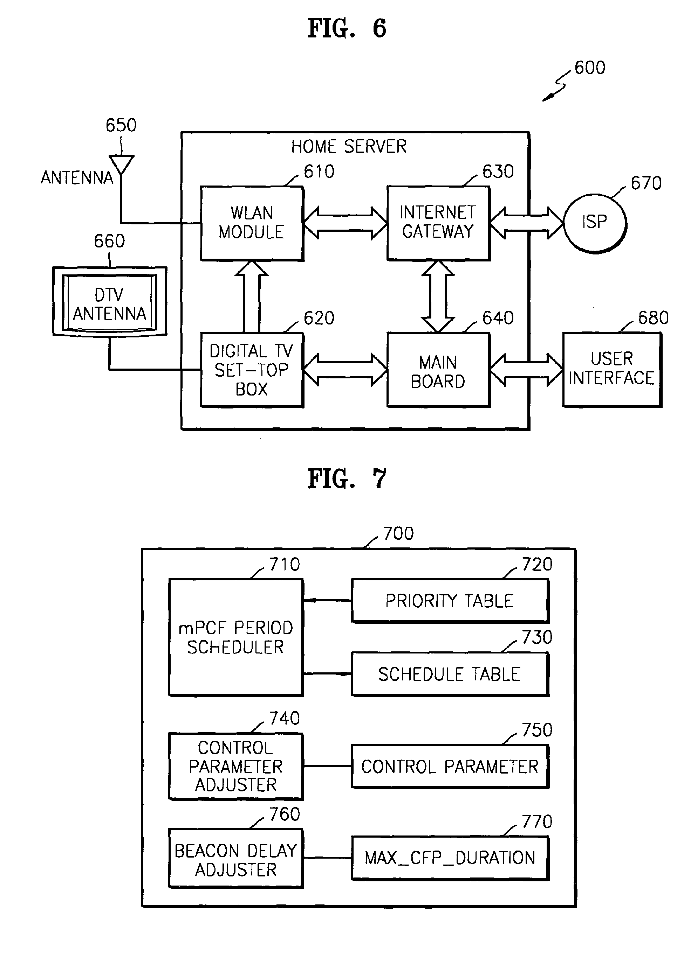

Figure 6 is a functional block diagram of a home server 600 to which mPCF scheduling can be effectively applied, according to an embodiment of the present invention. The home server 600 includes a WLAN module 610, a digital TV set-top box 620 receiving multimedia data from various sources, such as antennal, satellite, cable, etc., an Internet gateway 630 in communication with an Internet Service Provider (ISP) 670 to provide Internet connection, and a main board 640. The home server 600 serves as both an mPCF point coordinator and an mPCF access pointer, which controls multimedia traffic. If television sets or other home appliances include a digital broadcasting set-top box and a WLAN structure, and are able to control access to the Internet and serve as a central controller for a home network, they may also be modified to embody the mPCF MAC of the present invention and be allowed to replace the home server 600. Once the home server 600 is initialized, it and performs typical contention-based WLAN functions. For example, if multimedia devices registered on the home server 600 issue a request for access to the Internet or attempt to transmit regular data, the home server 600 allows a multimedia device or a station, which has won the right to use a channel by following a DCF manner, to do whatever such devices usually do.

In order to support the transmission of HDTV-level data, SDTV-level data, or other real-time data, a user may grant priority on resources to be used in an mPCF period using a user interface 680. Typically, the user interface 680 is set to have, as basic values, a priority value, which is determined based on the type of data, and a maximum load value. Once information of multimedia devices that need to be supported by the home server 600 in a home network is all set, multimedia devices that are compatible with the mechanism of the present invention can operate during both mPCF and DCF periods, while others, which are not compatible with the mechanism of the present invention, can operate during a DCF period.

Figure 7 is a functional block diagram of an mPCF period scheduling device according to an embodiment of the present invention. Referring to Figure 7, a scheduling device 700 may be implemented as software (and/or as computing hardware as the case may be) in the WLAN module 610 or the main board 640 of the home server 600 of Figure 6. The scheduling device 700 includes an MPCF period scheduler 710, a control parameter adjuster 740, and a beacon delay adjuster 760. As described above, the mPCF period scheduling device 700 may be controlled via the user interface 680.

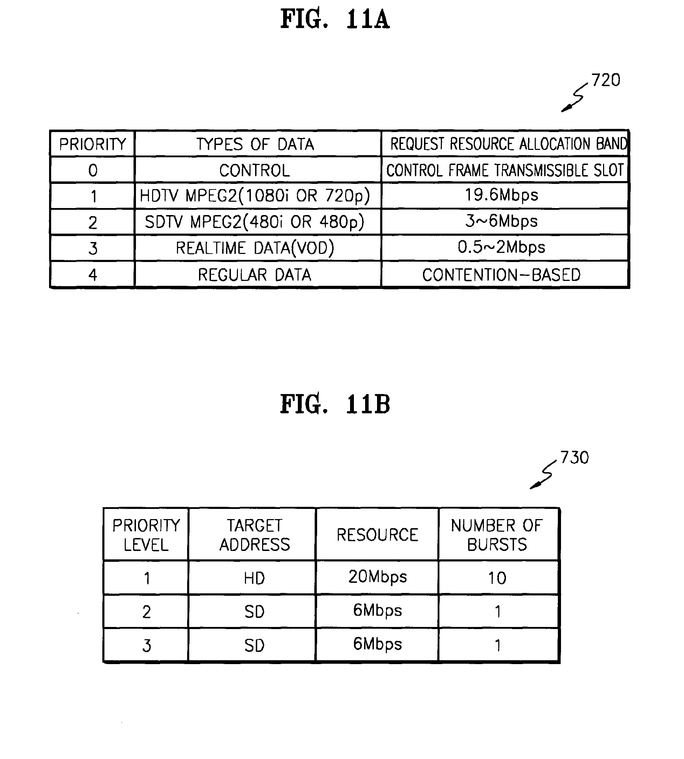

The mPCF period scheduler 710 schedules resource requests, which have been received during a DCF period, based on an mPCF priority table 720 and creates an mPCF schedule table 730. An example of the priority table 720 is illustrated in Figure 11A, and an example of the schedule table 730 is illustrated in Figure 11B. Typically, the control parameter adjuster 740 adjusts a control parameter 750, such as ACK protocol specification, based on received control information on resources from a predetermined device at an early stage of an mPCF period. The beacon delay adjuster 760 adjusts Max_CFP duration 770, when a DCF beacon delay occurs.

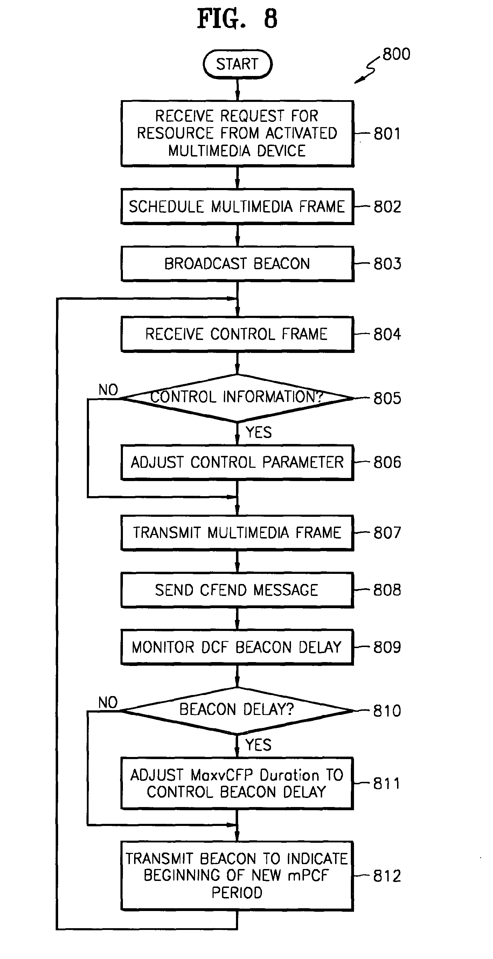

Figure 8 is a flowchart of transmitting multimedia data during an mPCF period, according to an embodiment of the present invention. In particular, Figure 8 is a flowchart of scheduling received data transmission resource requests, for example, multimedia resource requests, during an mPCF period, according to an embodiment of the present invention. Shortly after a mPCF point coordinator (i.e., the home server 600) is initialized, multimedia devices, i.e., stations, operate in a DCF manner, especially when there are no settings prepared for a station requesting multimedia data transmission. Activated HDTVs, SDTVs, or stations which want to receive a large amount of video-on-demand data, send a resource-requesting frame, containing information on multimedia data that they want to receive, to the mPCF point coordinator. Then, at operation 801, the mPCF point coordinator receives the resource-requesting frame from the activated multimedia device.

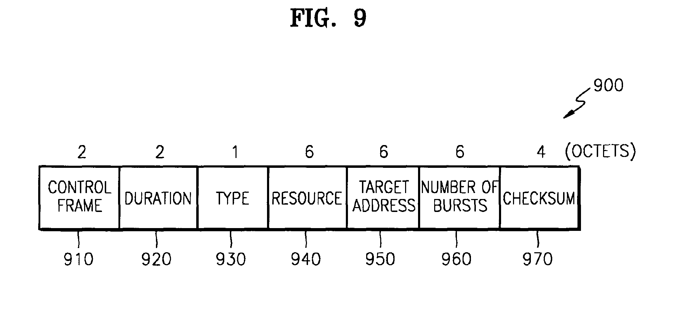

Figure 9 is a diagram of an example resource-requesting frame, according to an embodiment of the present invention. Referring to Figure 9, a resource requesting frame 900 includes a frame control 910 where packet control information is recorded, duration 920 where packet transmission time is recorded, type 930 where the type of data that a multimedia device wants to receive is recorded, resource 940 specifies the amount of data that the multimedia device wants to receive, target address 950 where the requested data is stored 950, number-of-bursts 960 indicating the amount of data desired to be transmitted at one time, and checksum 970 necessary for checking errors.

Referring back to Figure 8, in operation 802, an mPCF scheduler (i.e., mPCF period scheduler 710) of the mPCF point coordinator schedules multimedia data to be transmitted during an mPCF period to authorized (registered mPCF) stations according to priority levels and types of the multimedia.

Typically, the maximum amount of data that can be transmitted at one time has already been set into the mPCF point coordinator, and the mPCF point coordinator compares the total amount of resource for scheduled data with the set maximum total amount of serviceable resource, and sometimes denies a resource allocation request if the amount of resource requested exceeds a predetermined critical value, in order to protect (preserve) the reliability of data transmitted during an mPCF period.

An example of the priority table 720 is illustrated in Figure 11A. The priority table 720 specifies types of data and requested resource allocation bands. According to the priority table 720, typically, control data is No. 1 priority, and thus a priority level of 0 and a control frame transmissible slot is allotted to the control data. Since HDTV MPEG-2 data is No. 2 priority, a priority level of 1 and a band of about 19.6 Mbps is allotted to the HDTV MPEG-2 data. Since SDTV MPEG-2 data is No. 3 priority, a priority level of 2 and a band of about 3 - 6 Mbps is allotted to the SDTV MPEG-2 data. Since real-time data, such as video-on-demand (VOD), is No. 4 priority, a priority level of 3 and a band of 0.5 - 2 Mbps is allotted to the real-time data. Since regular data is No. 5 priority, a priority level of 4 and a contention-based band (i.e., DCF MAC) is allotted to the regular data.

An mPCF period scheduling process performed in an mPCF period will be described more fully in the following paragraphs. Typically, during an mPCF period, a scheduling algorithm is proportional to the amount of multimedia data requested. As shown in Figure 11A, HDTV-level data, SDTV-level data, and VOD data require transmission speeds of 20 Mbps, 6 Mbps, and 2 Mbps, respectively. Therefore, in the case of scheduling multimedia data into 1504 byte-packets, HDTV MPEG-2 data, SDTV MPEG-2 data, and VOD data require 1663 packets, 499 packets, and 166 packets, respectively, to be transmitted within 1 second. Supposing that an mPCF beacon interval is 100 msec, an mPCF period and a DCF period alternately come every 300 msec because a typical superframe size amounts to 3 beacon intervals. Frame scheduling is carried out at a constant rate during an mPCF period so that a predetermined number of packets can be transmitted in a single superframe. The predetermine number is determined using the following equation:

$$N_{MPDU} = \frac{RR \times 8}{S_{MPDU}} \times \frac{Duration_{superframe}}{1\text{sec}} \quad (1)$$

In the equation above, $N_{MPDU}$, $S_{MPDU}$, $RR$, and $Duration_{superframe}$ represent the number of packets to be transmitted in a single superframe, each MAC protocol data unit (MPDU) size (bytes), resource (bytes) requested for 1 second, and the duration of a single superframe, respectively.

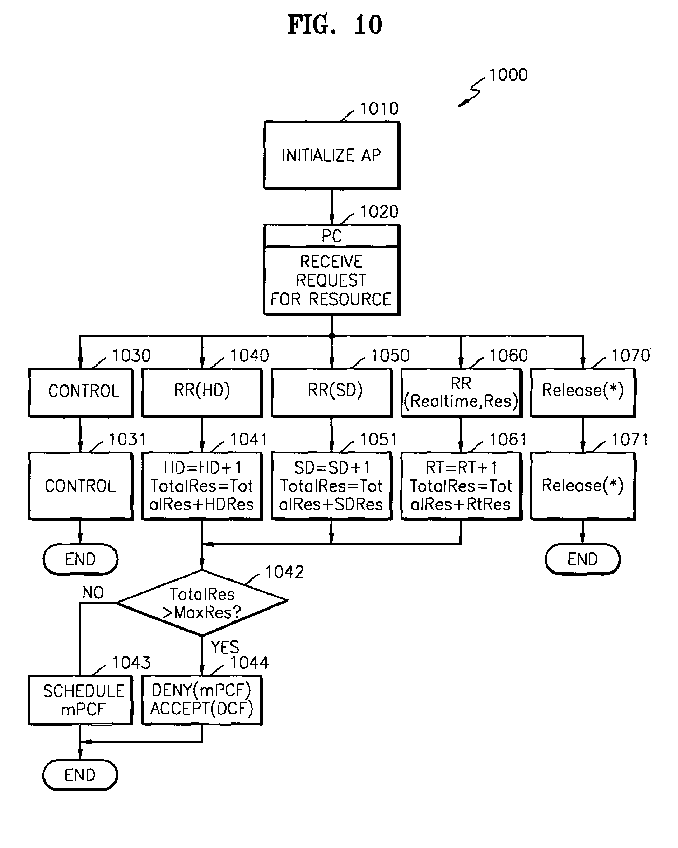

Figure 10 is a flowchart of scheduling an mPCF period (i.e., a received resource request allocation mechanism). In other words, Figure 10 is a flow chart of the mPCF period scheduler 710 in operation 803. Referring to Figure 10, at operation 1010, after an mPCF access pointer is initialized, at operation 1020, a mPCF point coordinator receives a resource-requesting frame.

At operation 1030, as soon as a control frame is received, at operation 1031 the received control frame is scheduled, because a control frame as specified in the table 720 generally has a highest priority level. Here, typically, the scheduling of the control frame indicates the adjustment of a control parameter based on received control information. The control parameter, for example, may be used to transmit control information such as ACK protocol type (e.g., ACK handshaking or ACK burst mode, as will be described in more detail further below), changes to digital TV broadcast channels, etc.

When, at operation 1040, an RR frame for HDTV is received, at operation 1041, an HD counter is increased by 1. Also, at operation 1041, total currently in use resources (TotalRes) has been initially set to 0. Therefore, in operation 1041, TotalRes is added to number of current resources allocated to HDTV (HDres), thus renewing TotalRes, and the renewed TotalRes is stored.

At operation 1042, it is determined whether TotalRes is greater than MaxRes, i.e., the maximum amount of resources as the maximum amount of data that can be transmitted at one time, which typically is previously set in the mPCF point coordinator. If, at operation 1042, TotalRes is greater than MaxRes, at operation 1044, an mPCF period is not scheduled, because resource allocation cannot be carried out. In other words, if, at operation 1042, TotalRes is greater than MaxRes, meaning that there is no available resource allocation band because all resource allocation bands are occupied, a request for scheduling of the mPCF period is denied, and, at operation 1044, a DCF is accepted.

Even in a case where an RR frame for SDTV (operations 1050, 1051) or a real-time data requesting frame (operations 1060, 1061) is received, a corresponding scheduling process undergoes almost the same operations as its counterparts for the control frame (operations 10310, 1031) and the RR frame for HDTV (operations 1040, 1041). In other words, irrespective of whether the resource requesting frame received in operation 1020 is the control frame, the RR frame for HDTV-level data, the RR frame for SDTV, or the real-time data requesting frame, the scheduling process allows resources to be allocated only when the total amount of resource that is currently occupied does not exceed a predetermined physically permissible maximum. If the amount of resources that is currently occupied exceeds the physically permissible maximum, multimedia devices are supposed to contend with one another for a chance to transmit data during a DCF period. At operation 1070, in a case where a release frame, indicating that resource allocation for an mPCF period is not necessary, is received, at operation 1071 the allocated resource is cancelled.

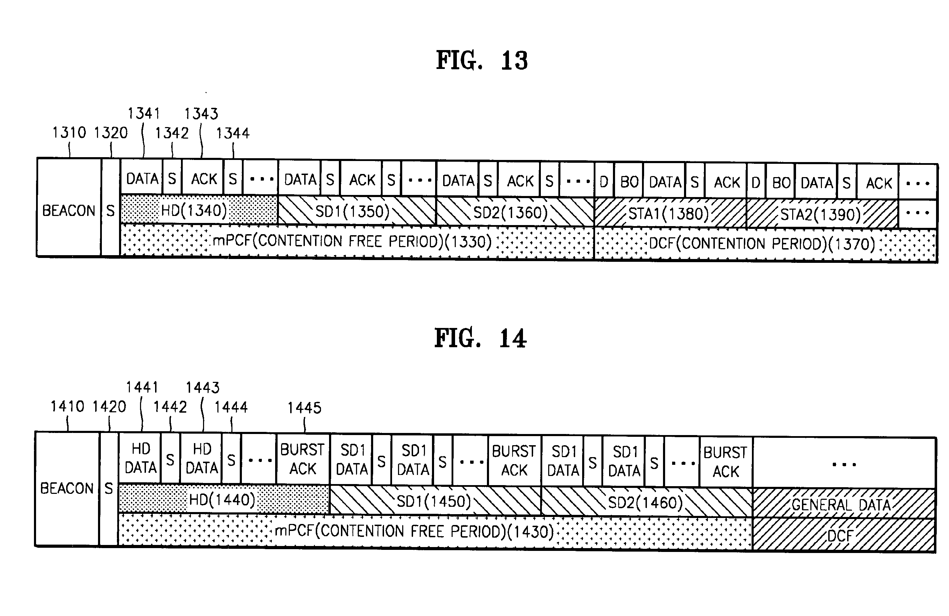

Figure 11B is an example of an mPCF scheduling table 730 shown in Figure 7. Referring to Figure 11B, HDTV-level data, given No. 1 priority, is allotted 20 Mbps resource and 10 bursts. SDTV-level data, given No. 2 priority, is allotted 6 Mbps resource and one burst. SDTV-level data, given No. 3 priority, is allotted 6 Mbps resource and one burst. The bursts mentioned here will be described later in greater detail with reference to Figures 13 and 14.

Referring back to Figure 8, at operation 803, the home server 600 (i.e., the mPCF point coordinator) broadcasts a mPCF beacon frame, if, at operation 802, the above-mentioned scheduling process is complete. The mPCF beacon frame contains important state information and time information. The home server 600 informs all home devices of the beginning of an mPCF period by broadcasting the mPCF beacon frame to the home devices. In addition, the mPCF beacon frame further contains information on bandwidths that have been allocated based on resource requesting frame information transmitted from each multimedia device to the home server.

In operation 804, the home server receives a control frame. In operation 805, the home server 600 determines whether the received control frame is valid. If the received control frame is valid, at operation 806, the home server 600 adjusts a control parameter. Otherwise, at operation 807, the home server transmits multimedia frames by referring to the mPCF schedule table 730 without making any changes to the control parameter.

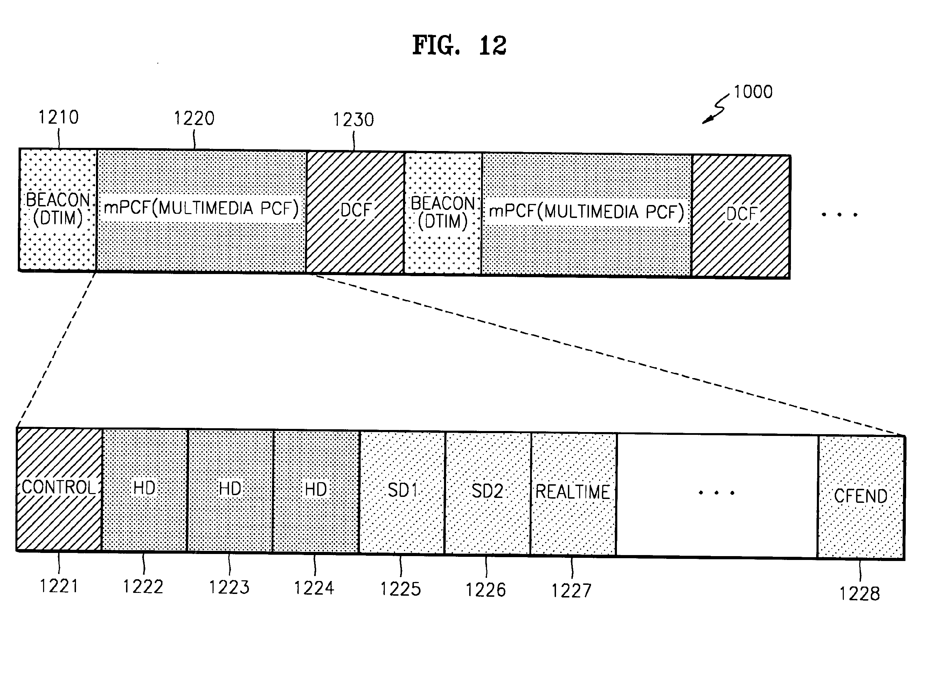

Figure 12 is a diagram illustrating various types of data transmitted, at operation 807, during an mPCF period and a transmission ratio among the various types of data, according to an embodiment of the present invention. More particularly, Figure 12 illustrates a data transmission period 1000 using a MAC that comprises mPCF and DCF. The data transmission period 1000 comprises an mPCF beacon frame 1210, an mPCF period 1220, during which reliable transmission of a considerable amount of multimedia data, control data, or real-time data is guaranteed, and a DCF period 1230, during which multimedia devices attempt to transmit data while contending with one another for access to a channel, and so on.

In Figure 12, a control slot frame 1221 can be introduced to transmit control information. An mPCF access pointer as implemented in the WLAN module 610 or Main board 640 of a data transmitter, for example, the home server 600, carries out scheduling so that transmission of high priority multimedia data, which requires a larger amount of resource, can be guaranteed first and foremost. Therefore, VOD data, which is of relatively lower priority, as compared with HDTV-level data or SDTV-level data, but also requires real-time data, can be scheduled at a final stage of the mPCF period 1220 at REAL-TIME 1227, depending on a current resource occupancy level. As shown in Figure 12, HD MPEG data 1222, 1223, 1224 are followed by SD1 MPEG data 1225, SD2 MPEG data 1226, and VOD 1227. The mPCF ends with a CF-End frame 1228.

A method of receiving an acknowledgement (ACK) message, which is a signal sent by multimedia devices in response to reception of multimedia data, will be described in greater detail in the following paragraphs with reference to Figures 13 and 14. An mPCF can operate in two different manners, i.e., in a handshaking ACK transmission manner and in a burst ACK transmission manner.

Figure 13 is a diagram illustrating a handshaking ACK transmission method during an mPCF period, according to an embodiment of the present invention. The handshaking ACK transmission method is a method of receiving a signal from a multimedia device for confirming that a data frame has been successfully transmitted to the multimedia device. In other words, after a pointer coordinator mPCF beacon 1310 and a space 1320, during an HD data 1340 transmission period of an mPCF period 1330, the mPCF point coordinator sends HD data 1341 to a predetermined multimedia device. After an SIFS interval 1342, the point coordinator receives ACK 1343 from the predetermined multimedia device, which is a signal for confirming that the HD data 1341 has been successfully transmitted to the predetermined multimedia device. Therefore, according to the handshaking ACK transmission method, whenever the mPCF point coordinator sends data 1341, 1343, to multimedia devices, the mPCF point coordinator receives ACKs 1342, 1344, respectively, from those receiving devices. The handshaking ACK transmission applies similarly to the SD1 1350 and SD2 1360 data transmission periods.

Figure 14 is a diagram illustrating a burst ACK transmission method during an mPCF period, according to an embodiment of the present invention. The burst ACK transmission method is a method of receiving ACK when every few data frames are transmitted. The burst ACK transmission method can guarantee better performance, because it can remove ACK overhead that affects each data frame by consecutively transmitting a predetermined number of data frames before an ACK is received. In other words, in Figure 14, after a point coordinator mPCF beacon 1410 and space 1420, during an HD data transmission period 1440 of an mPCF period 1430, the mPCF point coordinator transmits HD data 1441 to a network device. After an SIFS interval 1442, HD data 1443 is transmitted to the same network device. After the transmission of a predetermined number of HD data 1441 and 1143 to the same network device is complete, the mPCF point coordinator receives a burst ACK 1445. In other words, the network stations and the mPCF point coordinator are set, respectively, to transmit and receive, an ACK for a number of frames transmitted and received by a station. The burst ACK transmission applies similarly to the SD1 1450 and SD2 1460 data transmission periods.

Referring back to Figure 8, in operation 808, the home server 600 informs all the stations of the end of the mPCF period using a CF-End frame 1228, and then the stations contend with one another for access to a channel with MAC according to the DCF.

According to an aspect of the present invention, and as will be described in more detail further below, in Figure 8, at operation 809, DCF beacon delay is monitored. At operation 810, it is determined whether beacon delay has occurred. If, at operation 810, beacon delay has not occurred, at operation 812, the home server 600 transmits an mPCF beacon frame to inform the stations of the beginning of a new mPCF period. If, at operation 810, DCF beacon delay has occurred, at operation 811, the MaxCFPDuration 770 is adjusted.

DCF beacon delay, as described above with reference to Figure 3, indicates a phenomenon that a DCF operation lingers on even after a DCF period is over, because the transmission of data, which was supposed to be completed by the end of the DCF period, is still being carried out in an mPCF period following the DCF period. If nothing is done about such DCF beacon delay, the mPCF period cannot be guaranteed its original full length, because the DCF period encroaches on the mPCF period. According to the present invention, however, it is possible to prevent the mPCF period from being shortened due to DCF beacon delay, by adjusting the MaxCFPDuration 770 maintained by the mPCF period scheduling device 700. This aspect of the present invention is not limited to adjusting the mPCF period, but can also be applied to the conventional PCF period.

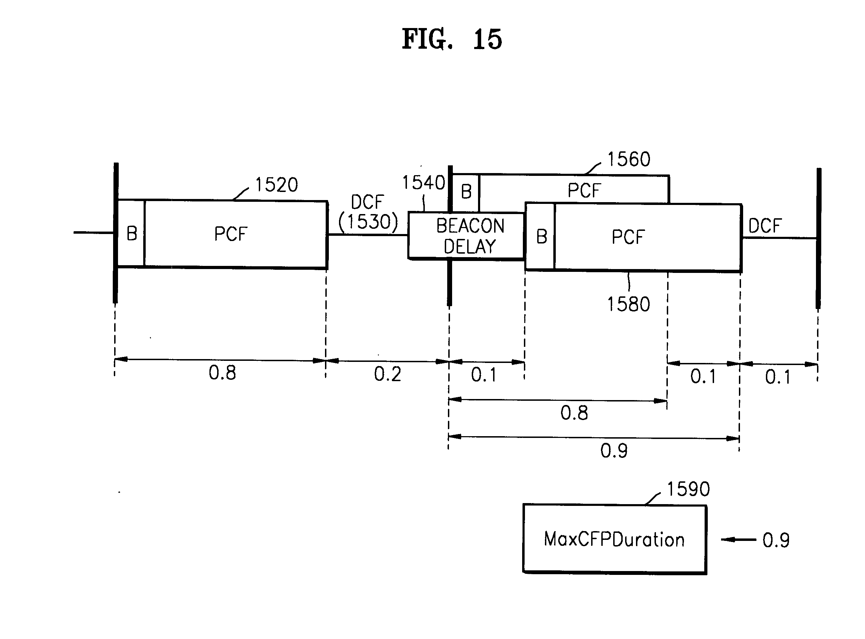

Figure 15 is a diagram illustrating a method of adjusting a DCF beacon delay, according to an embodiment of the present invention. More particularly, Figure 15 illustrates operations 810 and 811. Referring to Figure 15, a PCF period 1520 and a DCF period 1530 last, for example, for 0.8 sec and 0.2 sec, respectively. In the Figure 15 example, DCF delay 1540 occurs at a final stage of the DCF period 1530 and encroaches on the next PCF period 1560 by as much as 0.1 sec. If no measure is taken to prevent (take into account) the DCF beacon delay 1540, the PCF period 1560 is automatically shortened to 0.7 sec. In the present invention, as described above, the DCF beacon delay problem is solved by adjusting the MaxCFPDuration 1590 according to the DCF delay. For example, in Figure 15, the 0.1 sec DCF delay is added to the mPCF period 1580 to provide a total of 0.9 sec mPCF period, so that the mPCF 1580 is adjusted to the original period length of 0.8 sec taking into account the 0.1 sec DCF delay. When the DCF period 1530 is complete, MaxCFPDuration 1590 (770) is set so that the beginning, end, and duration of the PCF period 1580 can be determined in consideration of the DCF beacon delay 1540. Such DCF beacon delay adjustment generally does not affect the DCF period, because a start of the DCF period is driven by an end of the mPCF period (i.e., transmission of the CF-End frame by the mPCF point coordinator).

More particularly, the DCF beacon delay 1540 can be controlled by adjusting MaxCFPDuration 1590 (770) while calculating and monitoring time information of each DCF period. Different types of delay, i.e., buffering delay and jitter delay, may occur during the transmission of multimedia data. Buffering delay indicates the time taken for a station, which has received stream data, to store the stream data for a short period of time before reproducing the stream data. Since such buffering delay occurs only one time at an early stage of multimedia data transmission, it can be considered a minor problem. If jitters occur at any point during a station reproducing multimedia data, jitters should be maintained at a constant level until the end of the transmission of the multimedia data. However, a jitter bound data may also be delayed for some reason and cause jitter delay. Unlike the buffering delay, the jitter delay could bring about serious problems, such as discontinuous data streams, by affecting the arrival time of each data packet delivered to a station. A permissible jitter bound data for HDTV is within 1 msec, which can be easily solved by buffering. However, if a DCF beacon delay is not corrected and an mPCF period is shortened, it is likely to eventually cause a jitter delay by reducing the amount of data transmitted and buffered as well as a delay in the arrival of data packets. Therefore, correcting the DCF beacon delay allows more confidently avoiding a jitter delay caused by a buffer shortage as well as a delay in the arrival time of data packets, or avoiding irregular jitters (as the case may be).

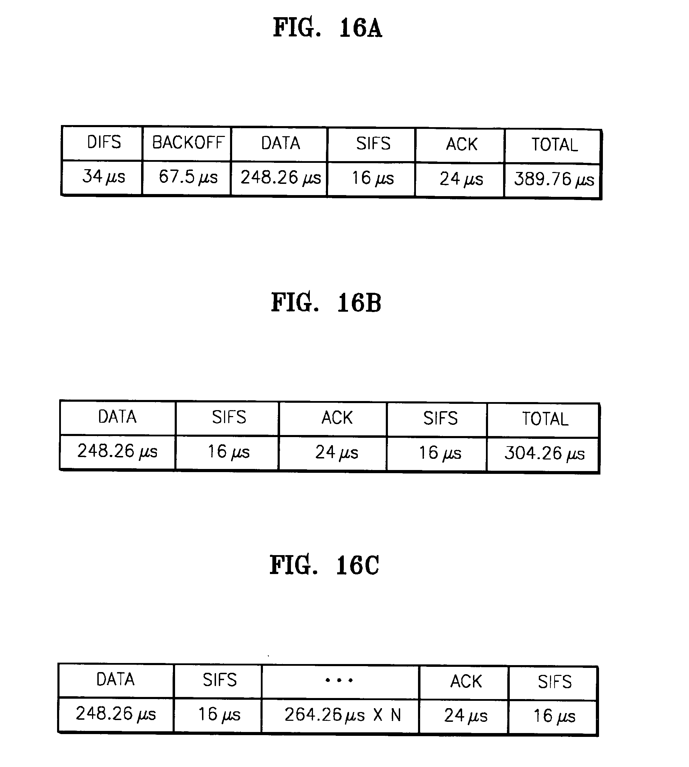

The unilateral mPCF data transmission period of the present invention improves WLAN data transmission performance as follows. The time taken to transmit an n-byte MAC frame at an OFDM rate of 54 Mbps is as follows: Time (the time taken to transmit n bytes) = Time (Physical Layer Convergence Procedure (PLCP) preamble) + Time (PLCP header) + Time (MAC frame). Accordingly, typically, the time taken to transmit 1504 bytes of an actual data excepting overhead in a WLAN is 248.26 Φs. Different channel access mechanisms may require different amounts of time to transmit a single data frame including overhead, which will become apparent in the following paragraphs comparing the present invention's mPCF with DCF with reference to Figures 16A through 16C. As described above, the conventional polling PCF period provides poor WLAN data transmission performance or not practical, because of significant polling overhead and implementation complexity, so that prior implementations still only use the DCF MAC.

Figure 16A shows the amount of time taken to transmit a single data frame including overhead during a DCF period in the conventional WLAN (i.e., the conventional WLAN data transmission performance data). In Figure 16A, the total amount of time taken to transmit a single data frame is (389.76 μs) including overhead, which is the amount of time actually taken to transmit data (248.26 μs), and Distributed Coordination Function Interframe Space (DIFS) time (34 μs), back-off time (67.5 μs), SIFS time (16 μs), and ACK time (24 μs) cor-

respond to overhead time. Here, the back-off time indicates an average amount of time taken to transmit data without any collisions.

Figure 16B shows the amount of time taken to transmit a single data frame including overhead during an mPCF period of the present invention. As shown in Figure 16B, during an mPCF period, the transmission of a data frame does not cause back-off delay, which is generally caused by collisions in DIFS, during which stations contend with one another for access to a limited number of channels as in the case of Figure 16A. Accordingly, the present invention's mPCF shows at least about a 85Φs data transmission performance improvement in transmitting a single data frame when compared to the Figure 16A conventional WLAN performance of 389.76μs.

Figure 16C shows the amount of time taken to transmit a single data frame during an mPCF period by using a burst ACK transmission method. In the burst ACK transmission method, a sending party consecutively transmits N data frames to a destination station without receiving any ACK messages, and when the transmission of all the N data frames is complete, the sending party receives ACK from the destination station. According to the burst ACK transmission method, it is possible to reduce overhead caused by frequent ACK transmissions. Improved WLAN data transmission quality allows for such burst ACK transmission to further substantially improve overall total transmission performance of two or more data frames including overhead on the WLAN by reducing ACK overhead, as shown in Figure 16C.

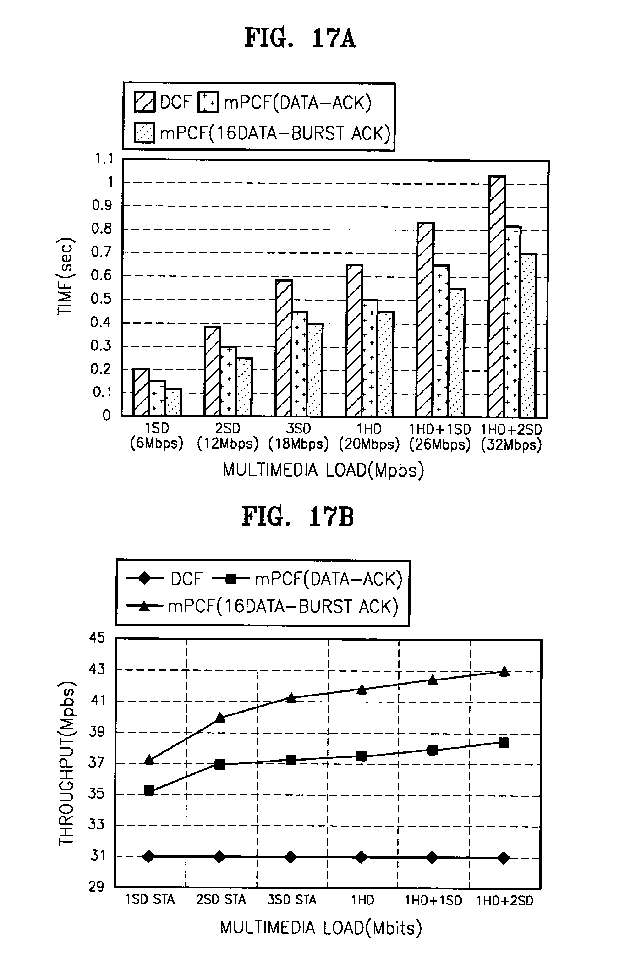

Figure 17A is a graph showing different amounts of time taken to transmit multimedia data with different loads during a DCF or mPCF period of the present invention. In particular, Figure 17A shows the amount of time taken to transmit multimedia data with different loads using different mechanisms when there is no competition among stations for the right to use a channel. As shown in Figure 17A, mPCF requires a less amount of time than DCF to transmit multimedia data with the same traffic load. Especially, the amount of time taken to transmit multimedia data during an mPCF period using a burst ACK transmission method is less than the amount of time taken to transmit multimedia data during the same period using a data ACK transmission method.

Figure 17B is a graph illustrating variations of the performance of different access mechanisms with respect to multimedia data loads when there are three stations contending with one another for a channel. More specifically, Figure 17B shows throughput variations with respect to multimedia load variations. As shown in Figure 17B, such a station contention does not affect an mPCF period, during which multimedia data is transmitted through an mPCF access pointer scheduling. In other words, throughput still improves regardless of whether a contention period, during which three stations contend with one another for a channel, exists. When a standard DCF is adopted to transmit data, the throughput is 30.9 Mbps. On the contrary, when an mPCF and a burst ACK transmission method, in which in response to the transmission of 16 data frames to a station, an ACK is received, the throughput is up to 42.8 Mbps for 1HD and 2SD multimedia data, which is a significant WLAN data transmission performance improvement.

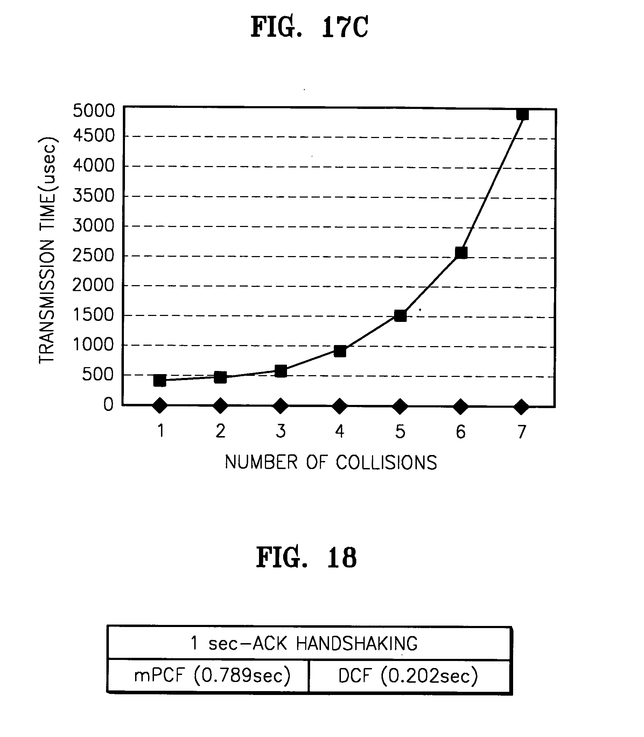

While, Figure 17A shows different amounts of time taken to transmit a 1504-byte data frame with only a single bout of back-off on the assumption that there is no collision among stations, Figure 17C shows the variation of the time taken to transmit a 1504-byte data frame on the assumption that a request for retransmitting the data is issued because of collisions between stations.

In Figure 17C, typically, 1504-byte MAC frame can carry 8 188-byte MPEG-2 frames. According to the above-mentioned equation (1) and Figure 16A, typically, the amount of time taken to transmit a payload of 1504 bytes via a 54 Mbps link without causing any collisions is 389.76 μs with all overhead possibilities taken into account. Typically, to guarantee quality-of-service (QoS) of an HDTV or seamless data reproduction, the HDTV should consecutively receive 8 MPEG frames before the reproduction of the previous 8 MPEG frames is completed. Typically, the amount of time taken to reproduce 8 MPEG frames in an HDTV is 601.6 μs. As shown in Figure 17C, the time taken to reproduce multimedia data in a station is longer than the time taken to transmit the multimedia data from a home gateway to a station only when the number of collisions among stations is 0 or 1. Therefore, it is possible to transmit HDTV-level multimedia using a DCF mechanism. However, if two or more requests for retransmission of multimedia data are issued due to frequent collisions, back-off time increases up to 4603.5 Φs. Thus, it is difficult to transmit as many data frames within a given time bound as requested for two or more multimedia resource requests. In addition, it is impossible to guarantee good QoS in the transmission of a considerable amount of real-time multimedia data by adopting a random back-off algorithm. According to the mPCF mechanism of the present invention, however, time slots are scheduled based on resource requesting information of stations during an mPCF period. Therefore, back-off, which is generally caused by collisions among stations when using DCF, and irregular jitters or jitter delays can be prevented by unilaterally transmitting data based upon a request in the mPCF period.

Figure 18 is a table showing how much time an mPCF period and a DCF period require in the case of transmitting 32 Mbit-multimedia data in 1 sec. with contention. The Figure 18 example is based upon Figure 1 using a 54 Mbps transmission link, and one HDTV (20 Mbps), two SDTVs (6 Mbps), and a plurality of stations (2 Mbps) all operating at the same time. As shown in Figure 18 based upon Figure 17A, in the case of adopting a data ACK transmission method, typically, 0.789 sec is required to transmit 32 Mbit multimedia data (20 Mbit HDTV-level data + 12 Mbit SDTV-level data) using an mPCF mechanism. The data processed during the 0.789 sec allows data to be reproduced during a DCF period of 0.202 sec. Therefore, it is possible for a receiving party to naturally reproduce the 32 Mbit multimedia data without any delay in 1 sec. Therefore, as shown in Figure 17A, given that, typically, an mPCF period alone has a data processing rate of at least 40.186 Mbps in 1 sec. using ACK handshaking and a period including the mPCF period and a DCF period has a data processing rate of 38.048 Mbps, the mPCF period shows higher data processing efficiency than the period including both the mPCF period and a DCF period.

The influence of jitter delay and DCF beacon delay on the present invention will be described in the following paragraph. An HDTV (20 Mbps) set allows a jitter delay of 1 msec, which approximates delay of two MAC packets, and 1 MAC packet is delayed due to an average beacon delay of 0.25 msec. Such amount of jitter delay and beacon delay can be successfully resolved by carrying out buffering only for a very short period of time, for example, for several hundreds of milliseconds, before stations reproduce stream data input in the buffer. Thus, QoS of multimedia data can be prevented from being seriously affected by jitter delay or beacon delay. However, in a case of considerable multimedia data, such as multiple home network wireless stations requesting HDTV resources, buffering may fail. According to the present invention, it is possible to transmit a considerable amount of HDTV-level multimedia data, such as multiple HDTV-level data, an operation which cannot be fully guaranteed in the prior art WLANs, by making the utmost use of the unilateral flow of multimedia data streams and adapting to the physical limits of the current level of WLAN data transmission technology. In addition, the scheduling method of the present invention can provide different services for different types of multimedia data. Furthermore, the beacon delay adjustment method of the present invention can stably guarantee the full length of a PCF period to further improve WLAN data transmission performance by reducing likelihood of jitter delay or irregular jitter in case of high volume multimedia WLAN traffic.

The present invention takes advantage of a characteristic of a home WLAN having devices supporting an HDTV or SDTV, in which unilateral data reception from a home server with a set-top box installed therein accounts for most of the entire traffic period. Therefore, the present invention provides a wireless local area network television set top box in communication with multimedia sources, comprising a programmed computer processor receiving a request for a multimedia resource from a predetermined requesting device connected to the WLAN, during a distributed coordination function (DCF) period when a right to use a network channel is distributed through contention, and unilaterally transmitting the requested multimedia resource to the predetermined requesting device during a multimedia point coordination function (mPCF) period when a right to use a network channel is distributed to the predetermined requesting device in a centralized manner. The unilateral mPCF period wireless data transmission allows reliably receiving and transmitting simultaneous multiple multimedia resource requests, and, in particular, simultaneous multiple HDTV resource requests.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1. A method of transmitting multimedia data over a wireless local area network (WLAN), the method comprising:

   receiving a request for a multimedia resource from a predetermined requesting device connected to the WLAN, during a distributed coordination function (DCF) period when a right to use a network channel is distributed through contention; and

   unilaterally transmitting the requested multimedia resource to the predetermined receiving device during a multimedia point coordination function (mPCF) period when a right to use a network channel is distributed to the predetermined requesting device in a centralized manner.

2. The method of claim 1, wherein the unilateral transmitting during the mPCF comprises determining how much of the requested multimedia resource will be transmitted and determining a transmission schedule depending upon a type of the requested multimedia resource.

3. The method of claim 1 or 2, wherein the request for multimedia resource specifies a method of transmitting an acknowledgement signal, and the unilateral transmitting transmits the requested multimedia resource according to the method of transmitting the acknowledgement signal.

4. The method of claim 3, further comprising:

   receiving the acknowledgement signal from the predetermined requesting device for each multimedia resource data unilaterally transmitted to the predetermined requesting device, if the method of transmitting the acknowledgement signal is a data acknowledgement transmission method; and

   receiving an acknowledgement signal from the predetermined requesting device for every predetermined number of multimedia resource data unilaterally transmitted to the predetermined requesting device, if the method of transmitting the acknowledgement signal is burst acknowledgement transmission method.

5. A method of transmitting multimedia data over a wireless local area network (WLAN), the method comprising:

   receiving a request for a multimedia resource from a predetermined requesting device connected to the WLAN;

   scheduling the received request for the multimedia resource; and

   transmitting the requested multimedia resource to the predetermined requesting device during a multimedia point coordination function (mPCF) period based on the scheduling.

6. The method of claim 5, wherein the transmitting comprises determining how much of the requested multimedia resource will be transmitted depending upon a type of the requested multimedia resource.

**7.** The method of claim 5 or 6, wherein in the scheduling, the requested multimedia resource is scheduled based on a priority level of the requested multimedia resource.

**8.** The method of claim 7, wherein as the requested multimedia data, control data ranks first in terms of priority, followed by motion picture experts group (MPEG) data and video on demand data.

**9.** The method of any of claims 5 to 8, wherein in the scheduling, if there is no available network band for the requested multimedia resource, a request for allocation of a network band to the requested multimedia resource is denied.

**10.** The method of claim 9, wherein the requested multimedia resource that is denied band allocation, is transmitted during a distributed coordination function (DCF) period.

**11.** A method of transmitting multimedia data over a wireless local area network (WLAN), the method comprising:

receiving a request for a multimedia resource;

dynamically allotting a predetermined length of a multimedia point coordination function (mPCF) period, during which the requested multimedia resource will be transmitted according to an amount of the requested multimedia resource; and

transmitting the requested multimedia resource during the allotted mPCF period.

**12.** A method of guaranteeing a full length of a point coordination function (PCF) period in a wireless local area network (WLAN), the method comprising:

monitoring a distributed coordination function (DCF) beacon delay; and

adjusting a PCF period value, if the DCF beacon delay occurs according to the monitoring.

**13.** A machine readable storage storing at least one program controlling a wireless transmitter to provide a wireless local area network (WLAN) multimedia point coordinator according to a process comprising:

receiving a request for a multimedia resource from a predetermined requesting device connected to the WLAN, during a distributed coordination function (DCF) period when a right to use a wireless network channel is distributed through contention; and

unilaterally transmitting the requested multimedia resource to the predetermined requesting device during a multimedia point coordination function (mPCF) period when a right to use a wireless network channel is distributed in a centralized manner.

**14.** The storage of claim 13 wherein the multimedia point coordinator process further comprises scheduling the received request for the multimedia resource and transmitting the requested multimedia resource to the predetermined requesting device during the mPCF period according to the scheduling.

**15.** The storage of claim 14, wherein the scheduling determines how much of the requested multimedia resource will be transmitted or determines a transmission schedule of the requested multimedia resource, according to a type of the requested multimedia resource by referring to a stored priority table.

**16.** The storage of claim 15, wherein in the stored priority table, as the multimedia resource, control data ranks first in terms of priority, followed by motion picture experts group (MPEG) data and video on demand (VOD) data.

**17.** The storage of claim 14, 15 or 16, wherein the scheduling comprises denying a request for allocation of the network channel to the requested multimedia resource if there is no available network channel for the requested multimedia resource.

**18.** The storage of any of claims 14 to 17, wherein the scheduling comprises dynamically allotting a predetermined length of the mPCF period, during which the requested multimedia resource will be transmitted, according to an amount of the requested multimedia resource.

**19.** The storage of any of claims 13 to 18, wherein the multimedia point coordinator process further comprises monitoring a DCF beacon delay and adjusting an mPCF period value according to the monitoring, if the monitoring determines a DCF beacon delay occurrence.

**20.** A wireless local area network television set top box in communication with multimedia sources, comprising:

a programmed computer processor receiving a request for a multimedia resource from a predetermined requesting device connected to the WLAN, during a distributed coordination function (DCF) period when a right to use a network channel is distributed through contention, and unilaterally transmitting the requested multimedia resource to the predetermined requesting device during a multimedia point coordination function (mPCF) period when a right to use a network channel is distributed to the predetermined requesting device in a centralized manner.

21. The set top box of claim 20, wherein the multimedia resource is multimedia data, including high definition television level data, from one or more of Internet, satellite, antenna, and cable.

22. A home wireless local area network (WLAN) system, comprising:

    a plurality of WLAN computing stations;

    a home server (600) on the WLAN and comprising a programmed computer processor controlling the server according to a process comprising:

        receiving a request for a multimedia resource from any one of the stations connected to the WLAN, during a distributed coordination function (DCF) period when a right to use a network channel is distributed through contention, and unilaterally transmitting the requested multimedia resource to the stations according to a transmission schedule during a multimedia point coordination function (mPCF) period when a right to use a network channel is distributed to each requesting station in a centralized manner.

23. The system of claim 22, wherein the WLAN computing stations are any one of standard television stations, standard high definition television stations, personal computers, and computing appliances.

24. The system of claim 22 or 23, wherein the home server (600) presents a user interface to set a priority level of a type of the multimedia resource and the programmed computer processor schedules the unilateral transmitting according to the set priority level.

# FIG. 1 (PRIOR ART)

EP 1 427 150 A2

FIG. 2 (PRIOR ART)

# FIG. 3 (PRIOR ART)

EP 1 427 150 A2

# FIG. 4 (PRIOR ART)

CONTENTION−FREE REPETITION INTERVAL(310)

CONTENTION−FREE PERIOD(400)

SIFS (403)  SIFS (407)  SIFS  PIFS  SIFS

402  404  408  411

BEACON | D1 +POLL | 406 | D2+ACK +POLL | 410 | D3+ACK +POLL | D4 +POLL | CF −END | CONTENTION PERIOD

U1 +ACK  U2 +ACK  U4 +ACK

NO RESPONSE TO CF−POLL

PIFS (401)  SIFS (405)  SIFS (409)  SIFS

Dx=FRAMES SENT BY POINT COORDINATIOR

Ux=FRAMES SENT BY POLLED STATIONS

RESET NAV

NAV

Max CFP Duration

EP 1 427 150 A2

**FIG. 5**

mPCF (510)

| B | RESOURCE1 (541) | RESOURCE2 (542) | RESOURCE3 (543) |
| --- | --- | --- | --- |
| | 3 | 1 | 1 |

DCF (520)

| REQUEST FOR RESOURCE1 (521) | REQUEST FOR RESOURCE2 (522) | REQUEST FOR RESOURCE3 (523) |
| --- | --- | --- |

540 MULTIMEDIA DATA

530 SCHEDULER

531

| RESOURCE1 | 3 |
| --- | --- |
| RESOURCE2 | 1 |
| RESOURCE3 | 1 |

# FIG. 6

# FIG. 7

# FIG. 8

START — 800

RECEIVE REQUEST FOR RESOURCE FROM ACTIVATED MULTIMEDIA DEVICE — 801

SCHEDULE MULTIMEDIA FRAME — 802

BROADCAST BEACON — 803

RECEIVE CONTROL FRAME — 804

CONTROL INFORMATION? — 805
NO / YES

ADJUST CONTROL PARAMETER — 806

TRANSMIT MULTIMEDIA FRAME — 807

SEND CFEND MESSAGE — 808

MONITOR DCF BEACON DELAY — 809

BEACON DELAY? — 810
NO / YES

ADJUST MaxvCFP Duration TO CONTROL BEACON DELAY — 811

TRANSMIT BEACON TO INDICATE BEGINNING OF NEW mPCF PERIOD — 812

# FIG. 9

900

| 2 | 2 | 1 | 6 | 6 | 6 | 4 | (OCTETS) |
|---|---|---|---|---|---|---|---|
| CONTROL FRAME | DURATION | TYPE | RESOURCE | TARGET ADDRESS | NUMBER OF BURSTS | CHECKSUM | |

910    920    930    940    950    960    970

EP 1 427 150 A2

## FIG. 10

1000

1010
INITIALIZE AP

1020
PC
RECEIVE
REQUEST
FOR RESOURCE

| 1030 | 1040 | 1050 | 1060 | 1070 |
|---|---|---|---|---|
| CONTROL | RR(HD) | RR(SD) | RR (Realtime,Res) | Release(*) |

| 1031 | 1041 | 1051 | 1061 | 1071 |
|---|---|---|---|---|
| CONTROL | HD=HD+1 TotalRes=TotalRes+HDRes | SD=SD+1 TotalRes=TotalRes+SDRes | RT=RT+1 TotalRes=TotalRes+RtRes | Release(*) |

END

END

1042
TotalRes >MaxRes?

NO

YES

1043
SCHEDULE mPCF

1044
DENY(mPCF) ACCEPT(DCF)

END

23

# FIG. 11A

720

| PRIORITY | TYPES OF DATA | REQUEST RESOURCE ALLOCATION BAND |
|----------|---------------|----------------------------------|
| 0 | CONTROL | CONTROL FRAME TRANSMISSIBLE SLOT |
| 1 | HDTV MPEG2(1080i OR 720p) | 19.6Mbps |
| 2 | SDTV MPEG2(480i OR 480p) | 3~6Mbps |
| 3 | REALTIME DATA(VOD) | 0.5~2Mbps |
| 4 | REGULAR DATA | CONTENTION−BASED |

# FIG. 11B

730

| PRIORITY LEVEL | TARGET ADDRESS | RESOURCE | NUMBER OF BURSTS |
|----------------|----------------|----------|------------------|
| 1 | HD | 20Mbps | 10 |
| 2 | SD | 6Mbps | 1 |
| 3 | SD | 6Mbps | 1 |

## FIG. 12

1210   1220   1230   1000

| BEACON (DTIM) | mPCF (MULTIMEDIA PCF) | DCF | BEACON (DTIM) | mPCF (MULTIMEDIA PCF) | DCF | ... |

| CONTROL | HD | HD | HD | SD1 | SD2 | REALTIME | ... | CFEND |

1221   1222   1223   1224   1225   1226   1227   1228

EP 1 427 150 A2

## FIG. 13

BEACON | S

1310 1320 1341 1342 1343 1344

DATA | S | ACK | S | ... | S | DATA | S | ... | S | ACK | DATA | S | ... | S | ACK | D | BO | DATA | S | ACK | S | ... | ...

HD(1340)

SD1(1350)

SD2(1360)

STA1(1380)

STA2(1390)

mPCF(CONTENTION FREE PERIOD)(1330)

DCF(CONTENTION PERIOD)(1370)

## FIG. 14

BEACON | S

1410 1420 1441 1442 1443 1444 1445

HD DATA | S | HD DATA | S | ... | S | BURST ACK | SD1 DATA | S | SD1 DATA | S | ... | S | BURST ACK | SD1 DATA | S | SD1 DATA | S | ... | S | BURST ACK | ... | GENERAL DATA

HD(1440)

SD1(1450)

SD2(1460)

mPCF(CONTENTION FREE PERIOD)(1430)

DCF

# FIG. 15

MaxCFPDuration ← 0.9

## FIG. 16A

| DIFS | BACKOFF | DATA | SIFS | ACK | TOTAL |
|------|---------|------|------|-----|-------|
| 34 $\mu$s | 67.5 $\mu$s | 248.26 $\mu$s | 16 $\mu$s | 24 $\mu$s | 389.76 $\mu$s |

## FIG. 16B

| DATA | SIFS | ACK | SIFS | TOTAL |
|------|------|-----|------|-------|
| 248.26 $\mu$s | 16 $\mu$s | 24 $\mu$s | 16 $\mu$s | 304.26 $\mu$s |

## FIG. 16C

| DATA | SIFS | $\cdots$ | ACK | SIFS |
|------|------|----------|-----|------|
| 248.26 $\mu$s | 16 $\mu$s | 264.26 $\mu$s X N | 24 $\mu$s | 16 $\mu$s |

## FIG. 17A

## FIG. 17B

## FIG. 17C

## FIG. 18

| 1 sec−ACK HANDSHAKING | |
|---|---|
| mPCF (0.789sec) | DCF (0.202sec) |